Europäisches Patentamt

European Patent Office

Office européen des brevets

(11) Veröffentlichungsnummer: **0 283 944 B1**

(12) **EUROPÄISCHE PATENTSCHRIFT**

(45) Veröffentlichungstag der Patentschrift: **25.11.92**

(21) Anmeldenummer: **88104307.9**

(22) Anmeldetag: **18.03.88**

(51) Int. Cl.5: **C08G 18/67**, C08G 18/66, C08G 18/08, C08F 283/00, C09J 175/16

Die Akte enthält technische Angaben, die nach dem Eingang der Anmeldung eingereicht wurden und die nicht in dieser Patentschrift enthalten sind.

(54) **Strahlungshärtbare Haftkleber auf Basis von Polyurethanacrylaten.**

(30) Priorität: **26.03.87 DE 3709920**

(43) Veröffentlichungstag der Anmeldung:
**28.09.88 Patentblatt 88/39**

(45) Bekanntmachung des Hinweises auf die Patenterteilung:
**25.11.92 Patentblatt 92/48**

(84) Benannte Vertragsstaaten:
**AT BE CH DE ES FR GB IT LI NL**

(56) Entgegenhaltungen:
**EP-A- 0 204 938**
**US-A- 4 153 778**

**CHEMICAL ABSTRACTS, Band 106, Nr. 8, Februar 1987, Seite 34, Zusammenfassung Nr. 51134m, Columbus, Ohio, US; & JP-A-61 192 717 (DAINIPPON PAINTING CO.) 27-08-1986**

(73) Patentinhaber: **BASF Aktiengesellschaft**
**Carl-Bosch-Strasse 38**
**W-6700 Ludwigshafen(DE)**

(72) Erfinder: **Schulz, Guenther, Dr.**
**Wasgaustrasse 24**
**W-6700 Ludwigshafen(DE)**
Erfinder: **Druschke, Wolfgang, Dr.**
**Berliner Strasse 28**
**W-6716 Dirmstein(DE)**
Erfinder: **Jaeger, Helmut**
**Im Weinberg 4**
**W-6719 Bobenheim(DE)**

**Beschreibung**

Die vorliegende Erfindung betrifft strahlungshärtbare Haftkleber, die spezielle Polyurethanacrylate und Monovinylverbindungen enthalten.

Haftklebende Massen werden in steigender Menge zur Herstellung von Etiketten, Klebebändern, Dekorfolien u.ä. selbstklebenden flächigen Gebilden eingesetzt. Die hierfür verwendeten Haftkleber müssen bestimmte Eigenschaften haben:

Neben einer guten Oberflächenklebrigkeit soll eine möglichst hohe Kohäsion der Beschichtung gegeben sein. Der Haftkleber soll zudem eine gute Beständigkeit gegen Licht, Luft und Feuchtigkeit besitzen und die Klebrigkeit soll über einen möglichst weiten Temperaturbereich konstant sein. Außerdem ist man zunehmend an Haftklebern interessiert, die keine Lösungsmittel enthalten, um aufwendige Abtrennanlagen für diese zu vermeiden.

Aus der DE-A 23 57 486 ist z.B. ein Verfahren zur Herstellung von Haftklebeüberzügen bekannt, bei dem ein bei Raumtemperatur flüssiges Gemisch aus einer klebrige Polymerisate bildenden mono-olefinisch ungesättigten Verbindung, einer zweifach olefinisch ungesättigten Verbindung und einem polymeren Stoff eines Erweichungspunktes unter 50°C und eines durchschnittlichen Molekulargewichtes von 500 bis 10 000 mit ionisierten Strahlen behandelt wird. Als mono-olefinisch ungesättigte Verbindungen können dabei Acryl- und Methacrylsäureester von meist 4 bis 12 C-Atome enthaltenden Alkanolen eingesetzt werden und man erhält Klebeschichten, die hohe Scherfestigkeit bei Raumtemperatur und gute Oberflächenklebrigkeit aufweisen. Von Nachteil ist jedoch, daß derartige Klebeschichten einen starken kalten Fluß und bei höheren Temperaturen ungenügende Scherfestigkeit haben.

Nach dem Verfahren des europäischen Patentes 00 88 300 werden selbsthaftende Überzüge durch Bestrahlen von Gemischen aus Derivaten von Dihydroxypropylacrylsäureestern, z.B. einem Versatic®säuremonoester des 2,3-Dihydroxypropyl-1-acrylats, mit Polymeren einer Glastemperatur unter 0°C und eines K-Werts von 20 bis 80 und/oder eines klebrigmachenden Harzes erhalten, die eine bei höheren Temperaturen verbesserte Scherfestigkeit aufweisen. Von Nachteil ist dabei jedoch ihre relativ geringe Schälfestigkeit bzw. Klebrigkeit, die sich durch Zusatz von Harzen nur auf Kosten der Scherfestigkeit erhöhen läßt.

Schließlich ist es aus der US-PS 4 305 854 bekannt, aus Gemischen aus einem Umsetzungsprodukt aus 1 Äquivalent eines Isocyanatgruppen enthaltenden Zwischenprodukts aus etwa 1 Äquivalent einer mehrere aktive Wasserstoffatome enthaltenden monomeren Verbindung mit 2 Äquivalenten eines organischen Polyisocyanats und 1 Äquivalent einer monomeren olefinisch ungesättigten Verbindung, die ein aktives Wasserstoffatom enthält, im Gemisch mit einem Klebrigmacher, einem Polymerisationsinhibitor sowie gegebenenfalls einem Photoinitiator sowie gegebenenfalls ein- oder mehrfach ungesättigten Verdünnungsmitteln durch Bestrahlen mit ultraviolettem Licht oder Elektronenstrahlen ohne Mitverwendung von Lösungsmitteln Haftklebeschichten zu erhalten, die auch bei erhöhter Temperatur gute Scherfestigkeiten aufweisen. Die Oberflächenklebrigkeit und Kohäsion derartiger Haftklebeschichten läßt jedoch noch zu wünschen übrig.

Es wurde nun gefunden, daß strahlungshärtbare Haftkleber, die

A. Oligomere bzw. polymere Umsetzungsprodukte eines Molekulargewichts von 500 bis 100 000 aus
   a) Diisocyanaten,
   b) 20 bis 99 Äquivalent%, bezogen auf die Komponente (a), Polyesterolen und/oder Polyetherolen,
   c) 0 bis 60 Äquivalent%, bezogen auf die Komponente (a), Alkandiolen mit 2 bis 50 C-Atomen,
   d) Hydroxyalkyl(meth)-acrylaten mit 2 bis 20 C-Atomen in den Alkylresten und
   e) Monohydroxyalkylcarbonsäuren,

   bei denen die Summe der Mengen der Komponenten (b), (c), (d) und (e) hinsichtlich ihrer OH-Gruppen der Menge der Komponente (a) äquivalent ist, die Menge der Komponenten (d) und (e) zusammen 1 bis 50 Äquivalent%, bezogen auf die Komponente (a) und das Äquivalentverhältnis der Komponente (d) zu der Komponente (e) 1:9 bis 9:1 beträgt, und

B. 2 bis 90 Gew.%, bezogen auf die Gesamtmenge der Komponenten A und B, an Monovinylverbindungen, deren Homopolymerisate Glastemperaturen unter 20°C aufweisen enthalten,

beim Bestrahlen mit energiereichen Strahlen Haftklebeschichten mit besonders hoher Oberflächenklebrigkeit und besonders hoher Kohäsion ergeben. Dies ist überraschend, da es aus der US-PS 4 153 778 bekannt ist, daß Überzüge aus Reaktionsprodukten von Polyoxitetramethylendiolen oder Polycaprolactonpolyolen, Diisocyanaten und Di- oder Trimethylolcarbonsäuren sowie Hydroxyalkylacrylaten, die z.B. mit Ultraviolettlicht bestrahlt sind, klebfreie Oberflächen haben.

Die Umsetzungsprodukte A haben vorzugsweise Molekulargewichte von 1 000 bis 30 000 und werden vorzugsweise in Mengen von 40 bis 70 Gew.%, bezogen auf die Gesamtmenge an Komponenten A und B eingesetzt. Die hier angegebenen Molekulargewichte werden aus der Menge an eingesetzten Monohydroxiverbindungen berechnet.

Für die Herstellung der Umsetzungsprodukte A werden als Diioscyanate (a) bevorzugt aliphatische Isocyanate, wie Isophoron-diisocyanat und/oder Hexamethylendiisocyanat eingesetzt. Geeignet sind ferner 2,4- oder 2,6-Toluylendiisocyanat, 4,4'-Diisocyanatodiphenylmethan und 4,4'-Diisocyanatodicyclohexylmethan.

Zusätzlich zu den Diisocyanaten können auch in Mengen von 0 bis 5 Äquivalent%, bezogen auf das gesamte Isocyanat (a) Triisocyanate, wie z.B. Trimerisierungsprodukte von Hexamethylendiisocyanat oder Trimerisierungsprodukte von Toluylendiisocyanat mitverwendet werden.

Als Komponente (b) für die Herstellung der Umsetzungsprodukte A, die vorzugsweise in einem Anteil von 50 bis 98 Äquivalent%, bezogen auf die Komponente (a), eingesetzt wird, kommen die für die Herstellung von Polyurethanen üblichen Polyether, wie Polytetramethylenoxid, Polypropylen- oder Polyethylenoxid in Frage, sowie Copolymere von Ethylen-und Propylenoxid, sowie die für die Herstellung von Polyurethanen üblichen Polyesterole, z.B. aus Adipinsäure und Gemischen verschiedener Alkandiole, wie Ethylenglykol, 1,3-Propandiol, 1,4-Butandiol, 1,5-Pentandiol, 1,6-Hexandiol und/oder Neopentylglykol in Frage. Derartige Polyetherole und Polyesterole haben meist Molekulargewichte von 200 bis 20 000, insbesondere von 500 bis 10 000.

Geeignete Alkandiole (c) mit 2 bis 50, insbesondere mit 2 bis 20 C-Atomen, die in Mengen von 0 bis 60 Äquivalent%, vorzugsweise in Mengen von 0 bis 40 Äquivalent%, bezogen auf die Komponente (a), eingesetzt werden, seien besonders 1,4-Butandiol und 1,6-Hexandiol sowie ferner 1,3-Propandiol, Ethylenglykol, 1,8-Octandiol und 1,10-Decandiol genannt.

Geeignete Hydroxyalkyl(meth)acrylate (d) mit 2 bis 20 C-Atomen in den Alkylresten sind vor allem Betahydroxyethylacrylat und -methacrylat sowie 4-Hydroxybutyl-acrylat und -methacrylat, ferner 2-Hydroxypropylacrylat und -methacrylat sowie insbesondere Versaticsäuremonoester des 2,3-Dihydroxy-propyl-1-acrylats.

Als Komponente (e) werden bei der Herstellung der Umsetzungsprodukte A Monohydroxyalkylcarbonsäuren eingesetzt. Geeignete Monohydroxyalkylcarbonsäuren sind vor allem Glykolsäure, Hydroxypivalinsäure und Äpfelsäure. Geeignet sind ferner alle sonstigen Hydroxycarbonsäuren mit geringer Neigung zur Bildung von Lactonen.

Die Menge der Komponenten (d) und (e) soll zusammen 1 bis 50, vorzugsweise 2 bis 40 Äquivalent%, bezogen auf die Komponente (a) betragen und das Äquivalentverhältnis (b) zu der Komponente (e) 1:9 bis 9:1, vorzugsweise 3:7 bis 7:3 betragen.

Die Komponente B der Haftkleber besteht zu 2 bis 90. vorzugsweise von 20. bis 70 Gew.%, bezogen auf die Gesamtmenge an A und B, an Monovinylverbindungen, die, wenn sie für sich polvmerisiert werden, Polymerisate mit Glastemperaturen unter 20°C ergeben. Beispiele hierfür sind Vinylester, wie Vinylpropionat, Pivalinsäurevinylester, Vinylbutyrat und Vinyllaurat sowie besonders Acryl- und Methacrylsäureester von 1 bis 20 C-Atome enthaltenden Alkanolen, wie Methylacrylat, Ethylacrylat, n-Butylacrylat und -methacrylat, Isobutyl-acrylat und -methacrylat, 2-Ethylhexylacrylat und -methacrylat. Von besonderem Interesse als Monovinylverbindung B sind die Versaticsäuremonoester des 2,3-Dihydroxypropyl-1-acrylats und des 1,3-Dihydroxypropyl-2-acrylats und deren Gemische, die durch Umsetzen von Versaticsäureglycidester mit Acrylsäure leicht zugänglich sind.

Bei der praktischen Herstellung der strahlungshärtbaren Haftkleber kann die Komponente A beispielsweise hergestellt werden, indem man zunächst ein isocyanat-terminiertes Oligo- oder Polyurethan aus den Komponenten a), b) und c) herstellt und dann die Endgruppen mit den Komponenten d) und e) abreagieren läßt.

Man kann die Komponente A aber auch herstellen, indem man als Komponenten d) und B) identische Hydroxialkyl(meth)-acrylate verwendet, z.B. die genannten Umsetzungsprodukte von Versaticsäureglycidester mit Acrylsäure. In diesem Fall erfolgt die vollständige Abreaktion der NCO-Gruppen erst bei der Herstellung der strahlungshärtbaren Mischung an sich. Die Reaktionstemperaturen für die Polyurethanbildung liegen im allgemeinen bei 40 bis 120°C, vorzugsweise bei 60 bis 90°C.

Die strahlungshärtbaren Haftkleber, die im wesentlichen aus den Komponenten A und B bestehen, können zusätzlich Hilfsstoffe in geringen Mengen enthalten, wie z.B. Polymerisationsstabilisatoren, wie Hydrochinon, Hydrochinonmonomethylether, Phenothiazin und Di-tert.-butyl-p-kresol sowie insbesondere, wenn eine Härtung unter UV-Bestrahlung vorgesehen ist, Photoinitiatoren, wie Benzophenon, Michlers Keton, Thioxanton, Bezoinether, Benzylketale oder Acylphosphinoxide. Die erfindungsgemäßen strahlungshärtbaren Haftkleber können zur Herstellung selbsthaftender Überzüge durch Beschichten flächiger Substrate verwendet werden und eignen sich besonders zur Herstellung von Klebebändern, Klebefolien und Selbstklebeetiketten. Als Trägermaterialien kommen beispielsweise Folien aus Polyethylen, Polypropylen, Polyethylenterephthalat und Polyvinylchlorid sowie Papier, Pappe, textile und Schaumstoffe in Frage.

Die Beschichtung der Trägermaterialien mit den erfindungsgemäßen Haftklebern kann in direktem Auftrag, z.B. durch Rakeln, Rollen, Gießen, Walzen oder mittels Düsen erfolgen. Die Haftkleber können auch nach dem sogenannten Transferverfahren in indirektem Auftrag aufgebracht werden. Für die Haftkleberaufträge wählt man Schichtdicken von 5 bis 500, insbesondere von 10 bis 200 $\mu$m, entsprechend Beschichtungen von 5 bis 500, insbesondere von 10 bis 200 g/m². Nach dem Aufbringen auf die Substrate können die Haftkleber-Beschichtungen mit UV-Licht oder energiereichen Strahlen, insbesondere mit Elektronenstrahlen hoher Energie, bestrahlt werden. Geeignete Strahlungsquellen sind insbesondere Elektronenstrahlgeneratoren, und zwar sowohl Scanner-Anlagen als auch Elektro-Curtain-Anlagen. Bei der Behandlung mit energiereichen Strahlen wird die Haftkleberschicht im allgemeinen mit einer Energiedosis von meist 1 bis 500 kGy (0,1 bis 50 M rad), vorzugsweise 10 bis 250 kGy (1 bis 25 M rad), bestrahlt. Besonders bewährt hat sich der Bereich von 15 bis 150 kGy (1,5 bis 15 M rad). Bei der Bestrahlung beträgt die Beschleunigerspannung des Generators im allgemeinen 150 bis 300, vorzugsweise 150 bis 200 KV.

Zur Beurteilung der Klebeeigenschaften von flächigen Gebilden, die mit den erfindungsgemäßen Haftklebern beschichtet sind, werden in den folgenden Beispielen Polyesterfolien derart beschichtet, daß der Überzug eine Dicke von 25 $\mu$m (entsprechend einem Auftrag von 25 g/m²) aufweist. Der auf dem Träger aufgebrachte Überzug wird mit Elektronenstrahlen in einer Elektro-Curtain-Anlage bestrahlt. Von den beschichteten und bestrahlten Folien werden jeweils 2 cm breite Prüfstreifen verwendet. Zur Bestimmung der Kohäsion wird der Schertest, zur Bestimmung der Klebrigkeit der Schältest wie folgt durchgeführt: Beim Schältest werden die Prüfstreifen auf eine verchromte Platte aufgegeklebt und parallel zur Klebeschicht, d.h. unter einem Winkel von 180°, abgeschält und die dafür notwendige Kraft gemessen. Die Abzugsgeschwindigkeit betragt 300 mm/min und die Messung wird 24 Stunden nach der Verklebung durchgeführt.

Als Maß für die Kohäsion der Klebstoffschicht wird der Schertest derart durchgeführt, daß die Prüfstreifen auf ein hochglanzverchromtes Blech mit einer Fläche von 2,0 x 2,5 cm aufgepreßt werden. Das Blech wird senkrecht eingespannt und das Ende des Klebestreifens mit 1 000 g belastet. Es wird dann die Zeit bestimmt, bis sich die Verklebung unter der konstanten Zugspannung von 1 000 g löst. Die Messung wird bei 20° und bei 50°C ausgeführt. Die in den folgenden Beispielen angegebenen Teile und Prozente beziehen sich, wenn nicht anders angegeben, auf das Gewicht. Die darin angegebenen Molekulargewichte wurden aus der Menge der eingesetzten Monohydroxiverbindungen berechnet.

Beispiel 1

Zu einer Mischung von 490 Teilen Polytetramethylenoxid des Molekulargewichts 2 000, 24 Teilen 1,4-Butandiol, 45 Teilen eines Versatic®säuremonoestergemisches von 2,3-Dihydroxypropyl-1-acrylat und 1,3-Dihvdroxy-propyl-2-acrylat, 2 Teilen Di-tert.-butyl-p-kresol und 0.7 Teilen Dibutylzinndilaurat werden bei 60°C 160 Teile Isophorondiisocyanat Zugegeben und das Gemisch 6 Stunden gerührt. Anschließend gibt man 15 Teile Glykolsäure zu und rührt bis zum vollständigen Verbrauch der Isocyanat-Gruppen. Man erhält ein Produkt eines Molekulargewichts von ca. 4 kg/Mol, das eine Säurezahl von 15 mg KOH/g hat.

Beispiel 2

Zu einem Gemisch von 507,4 Teilen eines Polyesterols aus Adipinsäure und einem Butandiol-, Pentandiol- und Hexandiolgemisch des Molekulargewichts 2 000, 6,1 Teilen 1,4-Butandiol, 15,8 Teilen 1,4-Butandiol-monoacrylat, 2 Teilen Di-tert.-butyl-p-kresol und 0,7 Teilen Dibutylzinndilaurat werden bei 60°C 116,6 Teile Isophorondiisocyanat gegeben und das Gemisch 6 Stunden gerührt. Anschließend gibt man 22.8 Teile Hydroxypivalinsäure zu und rührt weiter bis zum vollständigen Verbrauch der Isocyanatgruppen. Man erhält ein Produkt eines Molekulargewichts von ca. 5 kg/Mol, das die Säurezahl 16 mg KOH/g hat.

Beispiel 3

Man arbeitet wie in Beispiel 2 angegeben, setzt jedoch 400 Teile des Polyesterols, 10,7 Teile 1,4-Butandiol, 3,3 Teile 1,4-Butandiolmonoacrylat, 79,3 Teile Isophorondiisocyanat und 2,4 Teile Hydroxypivalinsäure ein. Man erhält unter sonst gleichen Bedingungen ein Produkt eines Molekulargewichts von ca. 30 kg/Mol und einer Säurezahl von < 1 mg KOH/g.

Beispiel 4

4

Zu einem Gemisch von 504,1 Teilen eines Polyesterols aus Adipinsäure und einem Gemisch aus gleichen Teilen Ethylenglykol und Diethylenglykol des Molekulargewichts 2 000, 6,2 Teilen 1,4-Butandiol, 15,8 Teilen 1,4-Butandiolmonoacrylat, 2 Teilen Di-tert.-butyl-p-kresol und 0,7 Teilen Dibutylzinnlaurat werden bei 60°C 116,6 Teile Isophorondiisocyanat gegeben und das Gemisch 6 Stunden gerührt. Anschließend gibt man 25,8 Teile Äpfelsäure zu und rührt bis zum vollständigen Verbrauch der Isocyanatgruppen. Man erhält ein Produkt eines Molekulargewichts von ca. 15 kg/Mol und einer Säurezahl von 21 mg KOH/g.

Vergleichsversuche

a) 11,9 Teile 2,2-Dimethylolpropionsäure werden mit 150,5 Teilen Isophorondiisocyanat gleichmäßig verteilt und nach Zusatz von 0,7 Teilen Dibutylzinnlaurat bei 90°C unter Rühren vollständig aufgelöst. Man gibt dann 490 Teile Polytetramethylenoxid des Molekulargewichts 2 000, 19 Teile Hexanol sowie 11,9 Teile 1,4-Butandiol zu und rührt weitere 5 Stunden bei 90°C. Anschließend gibt man 50 Teile des Versatic®säuremonoestergemisches von 2,3-Dihydroxypropyl-1-acrylat und 1,3-Dihydroxypropyl-2-acrylat zu und rührt bei der gleichen Temperatur weiter bis kein Isocyanat mehr nachgewiesen werden kann. Man erhält ein Produkt eines Molekulargewichts von ca. 5 kg/Mol und der Säurezahl 14 mg KOH/g.

b) Zur Herstellung eines carboxylgruppenfreien Polyurethanacrylats wird, wie in Beispiel 1 angegegeben gearbeitet, jedoch 22 Teile 1,4-Butandiol, 136 Teile Isophorondiisocyanat und 52,5 Teile des Versatic®säuremonoestergemisches von 2,3-Dihydroxypropyl-1-acrylat und 1,3-Dihydroxypropyl-2-acrylat eingesetzt (ein Zusatz einer Hydroxyalkylcarbonsäure erfolgte nicht). Man erhält unter sonst gleichen Bedingungen ein Produkt eines Molekulargewichts von ca. 5 kg/Mol und einer Säurezahl von < 2 mg KOH/g.

Die Produkte der Beispiele 1 bis 4 sowie der Vergleichsversuche (a) und (b) werden jeweils in der gleichen Menge Versaticsäuremonoestergemisch von 2,3-Dihydroxypropyl-1-acrylat und 1,3-Dihydroxypropyl-2-acrylat gelöst und die erhaltenen Haftkleber in einer Menge von 25 g/m² auf eine Polyesterträgerfolie aufgetragen. Die beschichteten Folien werden einer Elektronenbestrahlung von 35 kGy bei 175 keV Beschleunigungsenergie unterworfen. Die erhaltenen Klebefolien zeigen folgende Eigenschaften:

| Beispiel | Schälfestigkeit in N/cm | Scherfestigkeit bei 50°C (Stunden/1 000 g/5 cm²) |
|---|---|---|
| 1 | 4,2 | 3,3 |
| 2 | 4,8 | > 96 |
| 3 | 2,9 | 68 |
| 4 | 4,8 | > 96 |
| Vergleichsversuche | | |
| a | 1,5 | > 96 |
| b | 0,8 | > 96 |

**Patentansprüche**

1. Strahlungshärtbare Haftkleber, enthaltend
    A. Oligomere bzw. polymere Umsetzungsprodukte eines Molekulargewichts von 500 bis 100 000 aus
        a) Diisocyanaten,

b) 20 bis 99 Äquivalent%, bezogen auf die Komponente (a), Polyesterolen und/oder Polyetherolen,

c) 0 bis 60 Äquivalent%, bezogen auf die Komponente (a), Alkandiolen mit 2 bis 50 C-Atomen,

d) Hydroxyalkyl(meth)-acrylaten mit 2 bis 20 C-Atomen in den Alkylresten und

e) Monohydroxyalkylcarbonsäuren,

bei denen die Summe der Mengen der Komponenten (b),(c),(d) und (e) hinsichtlich ihrer OH-Gruppen der Menge der Komponente (a) äquivalent ist, die Menge der Komponenten (d) und (e) zusammen 1 bis 50 Äquivalent%, bezogen auf die Komponente (a) und das Äquivalentverhältnis der Komponente (d) zu der Komponente (e) 1:9 bis 9:1 beträgt, und

B. 2 bis 90 Gew.%, bezogen auf die Gesamtmenge der Komponenten A und B, an Monovinylverbindugen, deren Homopolymerisate Glastemperaturen unter 20°C aufweisen.

2. Strahlungshärtbare Haftkleber gemäß Anspruch 1, dadurch gekennzeichnet, daß sie, bezogen auf die Komponenten A und B, 40 bis 70 Gew.% Umsetzungsprodukte A eines Molekulargewichts von 1 000 bis 30 000 aus 50 bis 98 Äquivalent%, bezogen auf die Komponente (a), an Komponente (b), 0 bis 40 Aquivalent%, bezogen auf die Komponente (a), an Komponente (c) und 2 bis 40 Äquivalent%, bezogen auf die Komponente (a), an Komponenten (d) und (e), bei denen das Äquivalentverhältnis der Komponente (d) zu der Komponente (e) von 3:7 bis 7:3 beträgt, und als Komponente B Acryl- und/oder Methacrylsäureester von 1 bis 20 C-Atome aufweisenden, ggf. substituierten Alkanolen enthalten.

## Claims

1. A radiation-curable contact adhesive comprising

A. an oligomeric or polymeric reaction product having a molecular weight of from 500 to 100,000 of

a) a diisocyanate,

b) from 20 to 99 equivalent %, based on component (a), of a polyesterol or polyetherol,

c) from 0 to 60 equivalent %, based on component (a), of an alkanediol of 2 to 50 carbon atoms,

d) a hydroxyalkyl (meth)acrylate having 2 to 20 carbon atoms in the alkyl radical and

e) a monohydroxyalkylcarboxylic acid,

where the total of the quantities of components (b), (c), (d) and (e) is the equivalent in terms of OH groups to the quantity of component (a), the quantity of components (d) and (e) together accounts for from 1 to 50 equivalent %, based on component (a), and the equivalent ratio of component (d):(e) is from 1:9 to 9:1, and

B. from 2 to 90 % by weight, based on the total amount of components A and B, of a monovinyl compound whose homopolymer has a glass transition temperature of below 20°C.

2. A radiation-curable contact adhesive as claimed in claim 1, comprising, based on components A and B, from 40 to 70 % by weight of a reaction product A of a molecular weight of from 1,000 to 30,000 of from 50 to 98 equivalent %, based on component (a), of component (b), from 0 to 40 equivalent %, based on (a), of component (c) and from 2 to 40 equivalent %, based on component (a), of components (d) and (e), where the equivalent ratio of component (d): component (e) is from 3:7 to 7:3, and component B comprises an acrylic and/or methacrylic ester of substituted or unsubstituted alkanols of 1 to 20 carbon atoms.

## Revendications

1. Colles de contact durcissables par irradiation, qui contiennent

A. des oligomères ou des produits de réaction polymériques, d'un poids moléculaire de 500 à 100.000, constitués

a) de diisocyanates,

b) de 20 à 99 équivalents %, par rapport au composant (a), de polyestérols et/ou de polyéthérols,

c) de 0 à 60 équivalents %, par rapport au composant (a), d'alcanediols qui comportent de 2 à 50 atomes de carbone,

d) de (méth)acrylates d'hydroxyalkyle dont les radicaux alkyle comportent de 2 à 20 atomes de carbone et

e) des acides monohydroxyalkylcarboxyliques,

dans lesquels la somme des proportions des composants (b), (c), (d) et (e) équivaut, eu égard à leurs radicaux OH, à la proportion du composant (a), la proportion des composants (d) et (e) ensemble varie de 1 à 50 équivalents %, par rapport au composant (a) et le rapport d'équivalence du composant (d) par rapport au composant (e) varie de 1:9 à 9:1 et

B. 2 à 90% en poids, par rapport à la proportion globale des composants A et B, de composés monovinyliques, dont les homopolymères présentent des températures de transition vitreuse inférieures à 20°C.

2. Colles de contact durcissables par irradiation selon la revendication 1, caractérisées en ce qu'elles contiennent, par rapport aux composants A et B, de 40 à 70% en poids de produits de réaction A, d'un poids moléculaire de 1.000 à 30.000, constitués de 50 à 98 équivalents %, par rapport au composant (a), de composant (b), de 0 à 40 équivalents %, par rapport au composant (a), de composant (c) et de 2 à 40 équivalents %, par rapport au composant (a), de composants (d) et (e), dans lesquels le rapport d'équivalence du composant (d) au composant (e) varie de 3:7 à 7:3 et, à titre de composant B, des esters de l'acide acrylique et/ou de l'acide méthacrylique d'alcanols comportant de 1 à 20 atomes de carbone, éventuellement substitués.